# FASCICULE DE BREVET EUROPEEN

(11) **EP 2 614 575 B1**
(45) Date de publication et mention de la délivrance du brevet: **18.03.2015**
(21) Numéro de dépôt: 11755393.3
(22) Date de dépôt: 02.08.2011
(51) Int. Cl.: H02J 7/00, B60L 3/00

(54) **DISPOSITIF ET PROCÉDÉ DE LIMITATION DE COURANTS DE FUITE**
VORRICHTUNG AND VERFAHREN ZUR BEGRENZUNG DES LECKSTROMS
APPARATUS AND METHOD FOR LIMITING LEAKAGE CURRENT

(30) Priorité: 08.09.2010 FR 1057134
(43) Date de publication de la demande: 17.07.2013
(73) Titulaire: Renault S.A.S., 92100 Boulogne-Billancourt (FR)
(72) Inventeur: RIPOLL, Christophe, F-78460 Chevreuse (FR); FLUXA, Frédéric, F-78490 Galluis (FR)
(86) Numéro de dépôt international: PCT/FR2011/051858
(87) Numéro de publication internationale: WO 2012/032240

(56) Documents cités:
- EP-A1- 1 598 929
- JP-A- 2005 020 848
- US-A- 5 786 971
- US-A1- 2004 001 292
- US-A1- 2009 316 321

## Description

L'invention concerne la limitation des courants de fuite d'un appareil électrique et plus particulièrement la limitation des courants de fuite susceptibles d'apparaître au sein du châssis d'un véhicule automobile électrique ou hybride lors du branchement d'un chargeur de batteries.

Les chargeurs utilisés dans certains véhicules automobiles électriques ne sont pas isolés. Chaque élément du chargeur présente une capacité de mode commun par rapport au châssis. Lors du raccordement à un réseau de distribution d'énergie électrique, les tensions appliquées à ces différents éléments vont provoquer, à travers ces capacités, des courants de fuite à la terre.

Ces courants de fuite à la terre peuvent, lors de leur apparition, déclencher des protections différentielles de courant résiduel aptes à interrompre le processus de charge.

Dans le cas où un utilisateur touche le châssis du véhicule électrique pendant la charge, les courants de fuite à la terre deviennent des courants dits de « toucher » s'il y a un défaut de mise à la terre du véhicule. Ces courants de toucher sont potentiellement dangereux et sont limités par la norme internationale 61851-21 à 3.5mA.

Il est donc nécessaire de limiter ces courants de fuite. Il a été proposé à cet effet d'utiliser un transformateur créant une isolation galvanique entre le réseau de distribution et la batterie.

Les transformateurs utilisés sont des éléments volumineux dont la taille augmente avec la puissance de charge, ou avec le courant les traversant. Cette solution a donc pour inconvénient d'entraîner un coût supplémentaire ainsi qu'une augmentation du volume du dispositif, ce qui pénalise fortement le véhicule automobile électrique.

Le document US 2009/316321 divulgue un dispositif de limitation des courants de fuite pour un appareil électrique, de type chargeur de batteries embarqué à bord d'un véhicule automobile à traction électrique ou hybride, qui comprend des moyens pour détecter des courants de fuite entre le neutre et une structure électriquement conductrice dans laquelle est placé l'appareil et de déconnecter la batterie du circuit d'alimentation.

En outre, il est possible de raccorder les chargeurs actuels à des réseaux monophasé ou triphasés pour obtenir une puissance de charge plus élevée. Lors d'un raccordement à un réseau triphasé, les contraintes sur les transformateurs utilisés sont donc accrues.

Au vu de ce qui précède, la présente invention a pour but de limiter les courants de fuite d'un appareil électrique.

Un autre but de l'invention est de limiter les courants de fuite pour plusieurs types de réseau d'alimentation.

Selon un premier aspect, il est donc proposé un dispositif de limitation des courants de fuite pour un appareil électrique, de type chargeur de batterie embarqué à bord d'un véhicule automobile à traction électrique ou hybride.

Ce dispositif comprend des moyens pour détecter la position du neutre d'une source d'alimentation de l'appareil en énergie électrique et des moyens pour relier une capacité de limitation des courants de fuite entre le neutre et une structure électriquement conductrice dans laquelle est placé l'appareil.

Ainsi, la capacité disposée entre le neutre et la structure électriquement conductive permet de détourner en partie vers le neutre les courants de fuite de l'appareil électrique. Cette solution peut être appliquée à tout type de chargeur non isolé.

Avantageusement, le dispositif comprend un capteur de tension pour chaque phase de la source d'alimentation.

Les capteurs de tension permettent de déterminer le type d'alimentation (monophasé, triphasé), et de détecter la position des différentes phases et du neutre.

La source d'alimentation peut être un réseau d'alimentation triphasé ou monophasé.

Le dispositif peut comprendre trois capacités, les premières électrodes desdites trois capacités étant reliées entre elles et à un premier interrupteur apte à relier les trois capacités à ladite structure, les deuxièmes électrodes desdites trois capacités étant respectivement reliées à chacune des trois phases de la source d'alimentation.

Lors d'un raccordement à un réseau d'alimentation triphasé sans neutre, il est possible de reconstituer le neutre en reliant les trois phases avec des capacités. L'interrupteur permet de relier la structure électriquement conductrice au neutre ainsi reconstitué.

En outre, au moins deux phases sont respectivement reliées à des interrupteurs aptes à relier l'une au moins des deux phases à une capacité reliée à ladite structure.

Lors d'un raccordement à un réseau d'alimentation monophasé, ces deux phases sont utilisées. Les interrupteurs permettent de relier à ladite structure la phase sur laquelle le neutre est détecté.

Selon un autre aspect, il est proposé un procédé de limitation des courants de fuite pour un appareil électrique, de type chargeur de batterie embarqué à bord d'un véhicule automobile à traction électrique ou hybride.

Selon une caractéristique générale du procédé, on détecte la position du neutre d'une source d'alimentation de l'appareil en énergie électrique et l'on relie une capacité de limitation des courants de fuite entre le neutre et une structure électriquement conductrice dans laquelle est placé l'appareil électrique.

Avantageusement, on forme le neutre à partir des phases d'une source d'alimentation triphasée.

On n'alimente pas en énergie l'appareil électrique si le neutre n'a pas été détecté et relié à la structure électriquement conductrice de l'appareil électrique ou si le neutre n'a pas été formé.

Ainsi, le procédé selon l'invention permet d'empêcher au moins une partie de l'appareil électrique de fonctionner si la limitation des courants de fuites ne peut pas être mise en oeuvre.

D'autres avantages et caractéristiques de l'invention apparaîtront à l'étude de la description suivante, prise à titre d'exemple non limitatif et illustrée par les dessins annexés sur lesquels :
- la figure 1 illustre l'apparition de courant de fuite dans un chargeur de batterie d'un véhicule automobile électrique ;
- la figure 2 présente, de manière schématique, le principe général de limitation de courant de fuite selon l'invention ;
- la figure 3 illustre un mode de réalisation d'un dispositif de limitation selon l'invention ; et
- les figures 4, 5 et 6 illustrent le fonctionnement du dispositif de la figure 3.

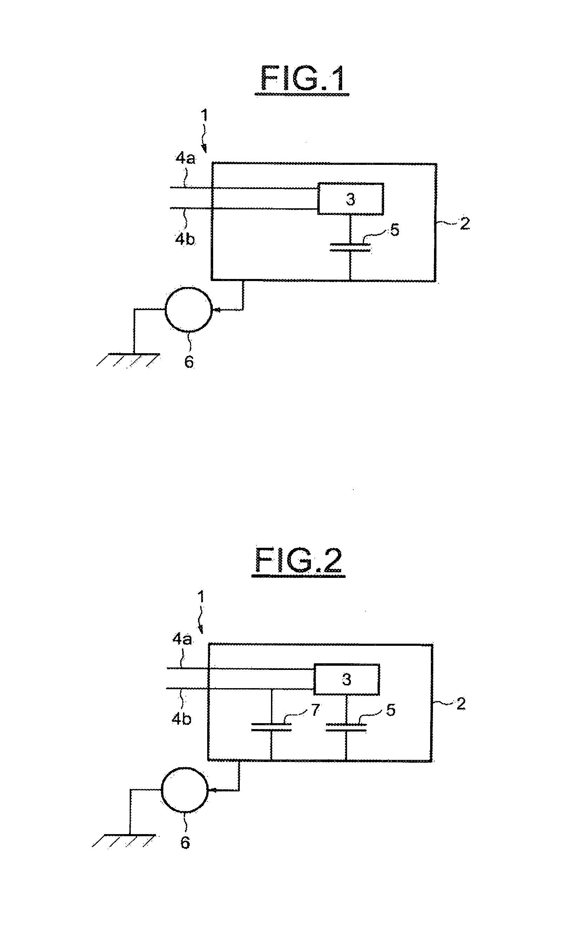

Sur la figure 1 on a représenté le principe de la génération de courants de fuite dits de « toucher » dans un véhicule électrique, auquel est raccordé un chargeur de batterie non isolé galvaniquement.

On notera toutefois que ce principe s'applique à tout type d'appareil, de type chargeur de batterie ou autre, notamment pour véhicule automobile à chaîne de traction électrique ou hybride dans lequel des courants de toucher sont susceptibles d'apparaître après raccordement de l'appareil lorsque l'on touche la carrosserie du véhicule.

Sur cette figure, la référence numérique 1 désigne le véhicule dans son ensemble et la référence 2 désigne une structure électriquement conductrice du véhicule, en l'espèce la carrosserie du véhicule.

Tel que représenté, le véhicule automobile électrique 1 est ici muni d'un chargeur 3 et comporte par ailleurs un ensemble de batteries et de chaîne de traction électrique non isolé.

Bien entendu, le véhicule 1 peut être, en outre, équipée de nombreux organes supplémentaires qui n'ont pas été représentés sur la figure pour des raisons de simplification.

Lors de la charge, le chargeur 3 est relié au réseau d'alimentation par plusieurs connexions électriques 4a et 4b. La connexion électrique 4a peut comporter plusieurs phases, et la connexion 4b correspond au neutre.

Lorsque le chargeur 3 est raccordé à un réseau électrique, des capacités parasites entre le chargeur 3 et la structure 2 (symbolisées par une capacité parasite 5), sont sources de courant de fuite.

Si un utilisateur 6, illustré ici par son impédance résistive, touche la structure 2, ce dernier est traversé par un courant de toucher créé à travers la capacité parasite 5.

La figure 2 présente, de manière schématique, la limitation des courants de fuite engendrés lors du raccordement du véhicule sur une borne de recharge. Comme on le voit, une capacité 7 est reliée entre le neutre 4b et la structure 2.

Les courants de fuite sont ainsi au moins en partie redirigés vers le neutre à travers la capacité 7 de sorte que l'utilisateur 6 est protégé, en étant traversé par un courant moindre que dans le cas décrit sur la figure 1.

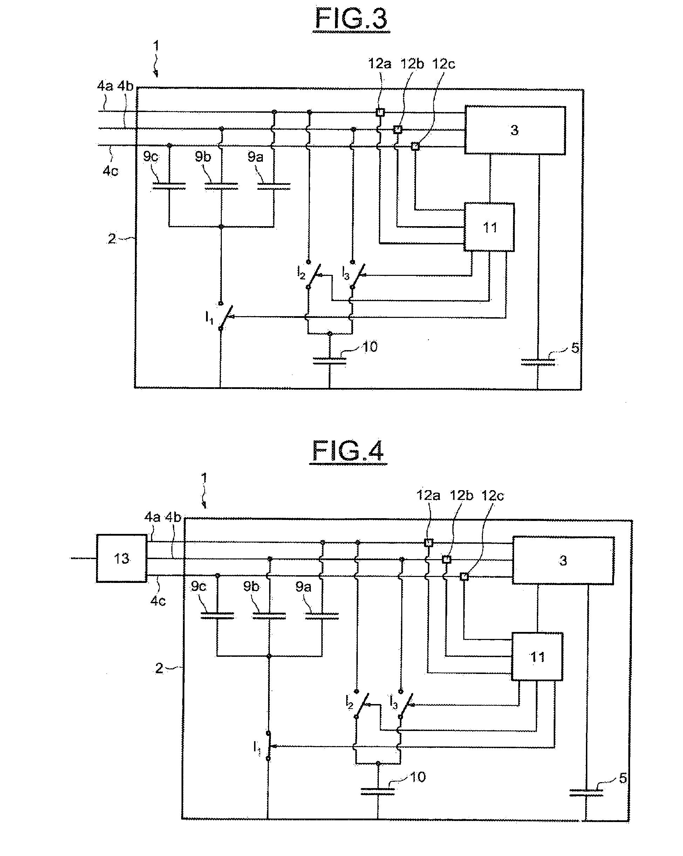

La figure 3 sur laquelle on a détaillé l'architecture d'un dispositif de limitation de courants de fuite selon l'invention illustre un véhicule 1 comportant trois connexions électriques 4a, 4b et 4c assurant le raccordement du véhicule à un réseau triphasé ou monophasé.

Le dispositif 1 comporte ici trois capacités 9a, 9b et 9c dont les premières électrodes sont reliées entre elles et à un premier interrupteur I₁ apte à relier les 3 capacités 9a, 9b et 9c à la structure électriquement conductrice 2. Les deuxièmes électrodes des capacités 9a, 9b et 9c sont respectivement reliées à chacune des trois connexions électriques 4a, 4b et 4c.

Les deux connexions électriques 4a et 4b sont respectivement reliées à deux interrupteurs I₂ et I₃ aptes à relier l'une au moins des deux connexions électriques 4a et 4b à une capacité 10 reliée à la structure 2.

Une unité de traitement 11 permet de contrôler les interrupteurs I₁, I₂ et I₃. Cette unité de traitement est en outre connectée au chargeur 3 et à trois capteurs de tension 12a, 12b et 12c.

L'unité de traitement 11 est également reliée au chargeur 3.

Ainsi, les capteurs de tensions 12a, 12b et 12c permettent d'indiquer le type de réseau d'alimentation auquel on a raccordé le véhicule 1, puis l'unité de traitement peut actionner l'un des interrupteurs I₁, I₂ ou I₃ pour relier à travers une capacité le neutre à la structure.

La figure 4 illustre un exemple d'utilisation d'un dispositif selon l'invention. Le véhicule 1 est ici raccordé à un réseau d'alimentation triphasé 13.

Dans une première étape, l'unité de traitement 11 empêche l'alimentation en énergie du chargeur 3.

Les trois connexions électriques 4a, 4b et 4c transportent respectivement chacune des phases, et les trois capteurs de tension 12a, 12b et 12c indiquent à l'unité de traitement 11 que le véhicule 1 est relié à un réseau d'alimentation triphasé.

L'unité de traitement 11 ferme l'interrupteur I₁ de manière à reconstituer le neutre qui sera relié à la structure 2 à travers les trois capacités 9a, 9b et 9c.

L'unité de traitement 11 autorise ensuite l'alimentation en énergie du chargeur 3.

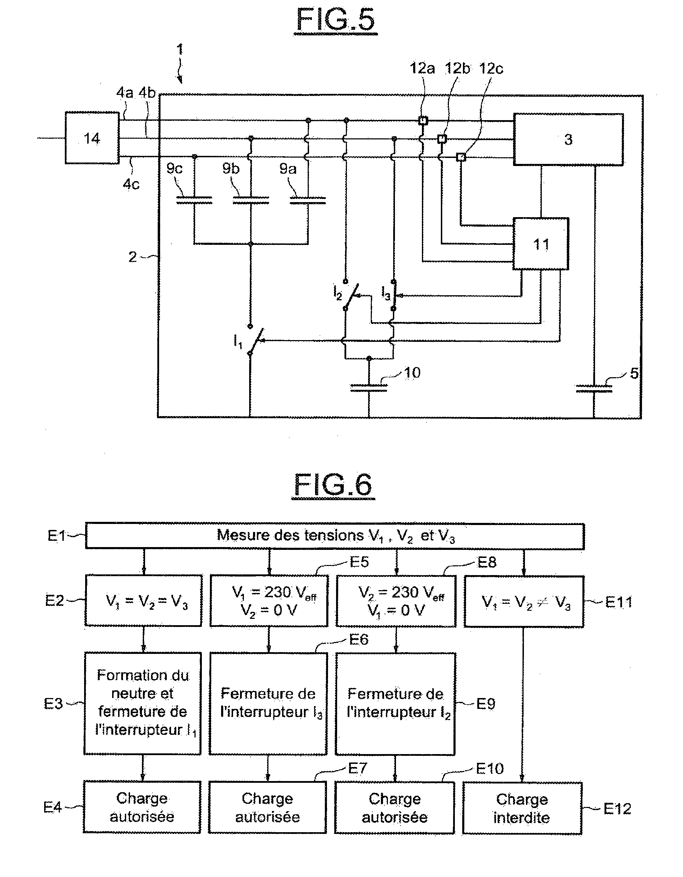

La figure 5 illustre un autre mode d'utilisation d'un dispositif selon l'invention dans lequel le véhicule 1 est raccordé à un réseau d'alimentation monophasé 14.

Dans une première étape, l'unité de traitement 11 empêche l'alimentation en énergie du chargeur 3.

Le capteur de tension 12a détecte la position de la phase et le capteur de tension 12b détecte le neutre.

L'unité de traitement ferme donc l'interrupteur I₃ de manière à raccorder le neutre à la structure 2 à travers la capacité 10.

L'unité de traitement 11 autorise ensuite l'alimentation en énergie du chargeur 3.

On notera que lors du raccordement à un réseau d'alimentation monophasé, la phase peut être située sur la connexion électrique 4b et le neutre sur la connexion électrique 4a. L'unité de traitement 11 fermera alors l'interrupteur I₂.

La figure 6 détaille les différentes étapes mises en oeuvre au sein d'un dispositif de limitation de courants de fuite selon les divers modes d'utilisation précédemment envisagés.

Ces étapes sont ici mises en oeuvre au sein d'un véhicule automobile électrique 1 comportant un chargeur 3. Une étape non représentée ici comprend le raccordement du véhicule 1 à un réseau d'alimentation électrique, et l'interdiction de la charge de la batterie.

Une première étape E1 est mise en oeuvre au moyen des trois capteurs 12a, 12b et 12c. Ces capteurs 12a, 12b et 12c mesurent respectivement les tensions V₁, V₂ et V₃. Les valeurs mesurées sont alors fournies à l'unité de traitement 11 où elles sont comparées.

Si les trois tensions mesurées V₁, V₂ et V₃ sont égales (étape E2), alors il est considéré que le véhicule a été correctement raccordé à un réseau d'alimentation triphasé 13. L'étape E3 suivante est alors mise en oeuvre. Elle correspond à la formation du neutre à partir des trois phases de l'alimentation triphasée 13 et à la fermeture de l'interrupteur I₁. Cette étape est également réalisée par l'unité de traitement 11. La charge est alors autorisée (étape E4).

Si la tension V₁ a une valeur efficace égale à 230V, et si la tension V₂ a une valeur nulle (étape E5), alors il est considéré que le véhicule 1 a été correctement raccordé à un réseau d'alimentation monophasé 14, et que la connexion électrique 4a transporte la phase, tandis que la connexion électrique 4b correspond au neutre. L'interrupteur I₃ est donc fermé au cours de l'étape E6 pour relier le neutre à la structure 2 à travers la capacité 10. L'étape E7 correspond à l'autorisation de la charge.

Les étapes E8, E9 et E10 sont similaires aux étapes E5, E6 et E7, dans le cas ou la phase et le neutre sont inversés.

Si la tension V₁ est égale à la tension V₂ mais diffère de la tension V₃ (étape E11), alors le véhicule est raccordé à un réseau d'alimentation dans lequel le neutre n'est pas déterminé et ne peut pas être reconstitué. L'étape E12 d'interdiction de charge est alors mise en oeuvre.

Grâce à l'invention, on bénéficie d'un dispositif pouvant être utilisé dans tout type d'appareil électrique comportant un organe électrique non isolé. L'invention permet une protection des usagers, et une utilisation simplifiée des appareils électriques dont le fonctionnement ne sera pas interrompu à cause de fuites de courants à la terre.

En outre, l'invention permet de limiter les courants de fuite au sein d'appareils électriques reliés à des réseaux d'alimentation monophasés ou triphasés.

## Revendications

1. Dispositif de limitation des courants de fuite pour un appareil électrique, de type chargeur de batterie embarqué à bord d'un véhicule automobile à traction électrique ou hybride,
**caractérisé en ce qu'**il comprend des moyens (11, 12a, 12b, 12c) pour détecter la position du neutre d'une source d'alimentation (13, 14) de l'appareil (3) en énergie électrique et des moyens (11, I₁, I₂, I₃) pour relier une capacité (9a, 9b, 9c, 10) de limitation des courants de fuite entre le neutre et une structure électriquement conductrice (2) dans laquelle est placé l'appareil (3).

2. Dispositif selon la revendication 1, **caractérisé en ce qu'**il comprend un capteur de tension (12a, 12b, 12c) pour chaque phase (4a, 4b, 4c) de la source d'alimentation (13, 14).

3. Dispositif selon l'une des revendications 1 ou 2, **caractérisé en ce que** la source d'alimentation est un réseau d'alimentation triphasé (13) ou monophasé (14).

4. Dispositif selon la revendication 3, **caractérisé en ce qu'**il comprend trois capacités (9a, 9b, 9c), les premières électrodes desdites trois capacités étant reliées entre elles et à un premier interrupteur (I₁) apte à relier les trois capacités (9a, 9b, 9c) à ladite structure (2), les deuxièmes électrodes desdites trois capacités (9a, 9b, 9c) étant respectivement reliées à chacune des trois phases (4a, 4b, 4c) de la source d'alimentation (13, 14).

5. Dispositif selon la revendication 4, **caractérisé en ce qu'**au moins deux phases (4a, 4b) sont respectivement reliées à des interrupteurs (I₂, I₃) aptes à relier l'une au moins des deux phases (4a, 4b) à une capacité (10) reliée à ladite structure (2).

6. Procédé de limitation des courants de fuite pour un appareil électrique de type pour chargeur de batterie embarqué à bord d'un véhicule automobile à traction électrique ou hybride,
**caractérisé en ce que** l'on détecte de la position du neutre d'une source d'alimentation (13, 14) de l'appareil (3) en énergie électrique et l'on relie une capacité (9a, 9b, 9c, 10) de limitation des courants de fuite entre le neutre et une structure électriquement conductrice (2) dans laquelle est placé l'appareil (3).

7. Procédé selon la revendication 6, **caractérisé en ce que** l'on forme le neutre à partir des phases (4a, 4b, 4c) d'une source d'alimentation triphasée (13).

8. Procédé selon la revendication 7, **caractérisé en ce que** l'on n'alimente pas en énergie l'appareil électrique (3) si le neutre n'a pas été détecté et relié à la structure électriquement conductrice (2) de l'appareil électrique (2) ou si le neutre n'a pas été formé.

## Patentansprüche

1. Vorrichtung zur Begrenzung des Leckstroms für ein elektrisches Gerät vom Typ Batterieladegerät, das an Bord eines Kraftfahrzeugs mit Elektro- oder Hybridantrieb eingebaut ist,
**dadurch gekennzeichnet, dass** sie Mittel (11, 12a, 12b, 12c), um die Position des Nullleiters einer Versorgungsquelle (13, 14) des Geräts (3) mit elektrischer Energie zu erfassen, und Mittel (11, I₁, I₂, I₃) zum Verbinden einer Kapazität (9a, 9b, 9c, 10) zur Begrenzung des Leckstroms zwischen dem Nullleiter und einer elektrisch leitenden Struktur (2), in der das Gerät (3) angeordnet ist, umfasst.

2. Vorrichtung nach Anspruch 1, **dadurch gekennzeichnet, dass** sie einen Spannungssensor (12a, 12b, 12c) für jede Phase (4a, 4b, 4c) der Versorgungsquelle (13, 14) umfasst.

3. Vorrichtung nach einem der Ansprüche 1 oder 2, **dadurch gekennzeichnet, dass** die Versorgungsquelle ein Dreiphasen- (13) oder Einphasen- (14) Versorgungsnetz ist.

4. Vorrichtung nach Anspruch 3, **dadurch gekennzeichnet, dass** sie drei Kapazitäten (9a, 9b, 9c) umfasst, wobei die ersten Elektroden der drei Kapazitäten miteinander und mit einem ersten Schalter (I₁) verbunden sind, der geeignet ist, die drei Kapazitäten (9a, 9b, 9c) mit der Struktur (2) zu verbinden, wobei die zweiten Elektroden der drei Kapazitäten (9a, 9b, 9c) jeweils mit jeder der drei Phasen (4a, 4b, 4c) der Versorgungsquelle (13, 14) verbunden sind.

5. Vorrichtung nach Anspruch 4, **dadurch gekennzeichnet, dass** mindestens zwei Phasen (4a, 4b) jeweils mit Schaltern (I₂, I₃) verbunden sind, die geeignet sind, mindestens eine der beiden Phasen (4a, 4b) mit einer Kapazität (10) zu verbinden, die mit der Struktur (2) verbunden ist.

6. Verfahren zur Begrenzung des Leckstroms für ein elektrisches Gerät vom Typ Batterieladegerät, das an Bord eines Kraftfahrzeugs mit Elektro- oder Hybridantrieb eingebaut ist,
**dadurch gekennzeichnet, dass** die Position des Nullleiters einer Versorgungsquelle (13, 14) des Geräts (3) mit elektrischer Energie erfasst wird, und eine Kapazität (9a, 9b, 9c, 10) zur Begrenzung des Leckstroms zwischen dem Nullleiter und einer elektrisch leitenden Struktur (2), in der das Gerät (3) angeordnet ist, angeschlossen wird.

7. Verfahren nach Anspruch 6, **dadurch gekennzeichnet, dass** der Nullleiter aus den Phasen (4a, 4b, 4c) einer Dreiphasenversorgungsquelle (13) gebildet wird.

8. Verfahren nach Anspruch 7, **dadurch gekennzeichnet, dass** das elektrische Gerät (3) nicht mit Energie versorgt wird, wenn der Nullleiter nicht erfasst und nicht mit der elektrisch leitenden Struktur (2) des elektrischen Geräts (3) verbunden wurde, oder wenn der Nullleiter nicht gebildet wurde.

## Claims

1. Device for limiting leakage currents for an electrical apparatus, such as a battery charger installed onboard a motor vehicle with electrical or hybrid drive,
**characterized in that** it comprises means (11, 12a, 12b, 12c) for detecting the position of the neutral of a source (13, 14) for supplying the apparatus (3) with electrical power and means (1₁, I₁, I₂, I₃) for connecting a capacitor (9a, 9b, 9c, 10) for limiting the leakage currents between the neutral and an electrically conductive structure (2) in which the apparatus (3) is placed.

2. Device according to Claim 1, **characterized in that** it comprises a voltage sensor (12a, 12b, 12c) for each phase (4a, 4b, 4c) of the supply source (13, 14) .

3. Device according to either of Claims 1 and 2, **characterized in that** the supply source is a three-phase (13) or single-phase (14) supply network.

4. Device according to Claim 3, **characterized in that** it comprises three capacitors (9a, 9b, 9c), the first electrodes of said three capacitors being connected together and to a first switch (I₁) capable of connecting the three capacitors (9a, 9b, 9c) to said structure (2), the second electrodes of said three capacitors (9a, 9b, 9c) being respectively connected to each of the three phases (4a, 4b, 4c) of the supply source (13, 14).

5. Device according to Claim 4, **characterized in that** at least two phases (4a, 4b) are respectively connected to switches (I₂, I₃) capable of connecting at least one of the two phases (4a, 4b) to a capacitor (10) connected to said structure (2) .

6. Method for limiting leakage currents for an electrical apparatus such as a battery charger installed onboard a motor vehicle with electrical or hybrid drive,
**characterized in that** the position of the neutral of a source (13, 14) for supplying the apparatus (3) with electrical power is detected and a capacitor (9a, 9b, 9c, 10) for limiting the leakage currents between the neutral and an electrically conductive structure (2) in which the apparatus (3) is placed is connected.

7. Method according to Claim 6, **characterized in that** the neutral is formed from the phases (4a, 4b, 4c) of a three-phase supply source (13).

8. Method according to Claim 7, **characterized in that** the electrical apparatus (3) is not supplied with power if the neutral has not been detected and connected to the electrically conductive structure (2) of the electrical apparatus (3) or if the neutral has not been formed.
